# EUROPEAN PATENT SPECIFICATION

(11) **EP 0 830 404 B1**
(45) Date of publication and mention of the grant of the patent: **05.01.2000**
(21) Application number: 96914925.1
(22) Date of filing: 16.04.1996
(51) Int. Cl.: C08G 18/32, C08G 18/38, C08G 18/48, C08J 9/14

(54) **RIGID POLYURETHANE FOAMS AND PROCESS OF THEIR PREPARATION**
POLYURETHANHARTSCHÄUME UND VERFAHREN ZU IHRER HERSTELLUNG
MOUSSES RIGIDES DE POLYURETHANNE ET LEUR PROCEDE DE PREPARATION

(30) Priority: 18.05.1995 EP 95201301
(43) Date of publication of application: 25.03.1998
(73) Proprietor: Huntsman ICI Chemicals LLC, Wilmington Newcastle Delaware 19801 (US)
(72) Inventor: DE VOS, Rik, I-21100 Varese (IT); VAN ESSCHE, Gonda, D-67549 Worms (DE); MATHYS, Bruno, B-1390 Nethen (BE)
(74) Representative: Swinnen, Anne-Marie
(86) International application number: EP9601593
(87) International publication number: WO9636655

(56) References cited:
- EP-A- 0 498 628
- EP-A- 0 498 629
- WO-A-95/02620
- US-A- 3 165 483

## Description

This invention relates to rigid polyurethane foams and more especially to open celled rigid polyurethane foams and to methods for their preparation and to their use in evacuated insulation panels.

The production of foamed materials based on polyurethane and other polymer systems derived from organic polyisocyanates is well established. Depending upon the formulations used in their manufacture, the products can vary in texture from the soft flexible foams used as cushioning materials to the rigid foams used as insulating or structural materials.

Rigid polyurethane foams can be of the closed cell type or of the open cell type. An important application of open celled rigid polyurethane foam is as filler material in evacuated insulation panels as described in European Patent Publications Nos 188806 and 498628.

In European Patent Publication No. 498628 a process for preparing open celled rigid polyurethane foam is described, said process comprising the step of reacting an organic polyisocyanate with an isocyanate-reactive material in the presence of a blowing promotor being an isocyanate-reactive cyclic compound of formula: 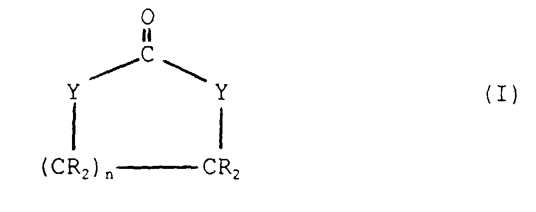 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an insoluble organic liquid which is present as the dispersed phase of an emulsion or a microemulsion and in the presence of a metal salt catalyst.

In WO 95/02060 the same process is described carried out in the presence of a diol of high molecular weights (above 2000).

Generally it is preferable that the closed cell content of the obtained foam is as low as possible, especially if the foam is to be used as filler in evacuated insulation panels.

Therefore it is an object of the present invention to decrease the closed cell content of the open celled rigid polyurethane foams of the prior art.

Accordingly the present invention provides a process for the preparation of rigid foams comprising the step of reacting an organic polyisocyanate with an isocyanate-reactive material in the presence of a blowing promotor being an isocyanate-reactive cyclic compound of formula: 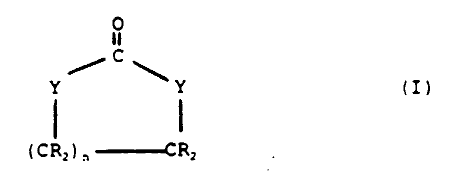 wherein
Y is O or NR¹ wherein each R¹ independently is a lower alkyl radical of C₁-C₆ or a lower alkyl radical substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an insoluble organic liquid showing a solubility in either the isocyanate-reactive composition or the polyisocyanate composition of less than 500 ppm by weight at 25°C and atmospheric pressure and in the presence of a metal salt catalyst, wherein the foam forming composition also contains a primary diol which is a polyethyleneglycol (HO-(CH₂-CH₂-O)ₙH) containing from 2 to 10 ethylene units (n), preferably up to 5 ethylene units, such as diethyleneglycol (HC-CH₂-CH₂-O-CH₂-CH₂-OH).

The primary diol/isocyanate-reactive cyclic blowing promotor weight ratio is generally within the range 0.1 to 20, preferably 0.4 to 1.5.

The primary diol is preferably preblended with the isocyanate-reactive component and/or with the isocyanate-reactive cyclic blowing promotor.

A preferred compound of formula (I) wherein Y is O is an isocyanate-reactive cyclic carbonate which is glycerol carbonate.

Preferred compounds of formula (I) wherein Y is NR¹ are isocyanate-reactive cyclic ureas of formula: 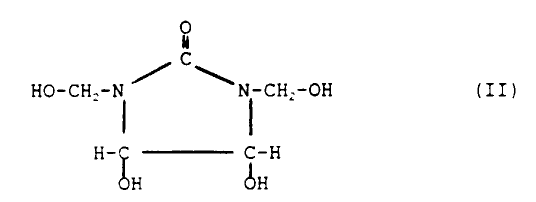 and

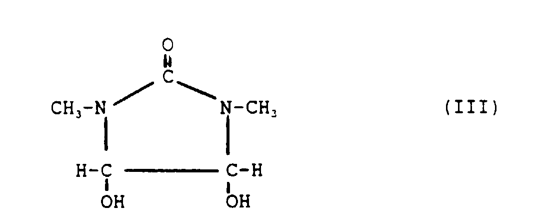

The isocyanate-reactive cyclic blowing promotor is used in amounts ranging from 1 to 99 %, preferably from 1 to 60 % by weight based on the total isocyanate-reactive material.

Suitable further blowing agents may be used in the method of the present invention such as water or inert low boiling compounds having a boiling point of above -50°C at 1 bar.

The amount of water used as blowing agent may be selected in known manner to provide foams of the desired density, typical amounts being in the range from 0.05 to 5 parts by weight per 100 parts by weight of reactive ingredients, although it may be a particular embodiment of the present invention to incorporate up to 10 % by weight or even up to 20 % by weight of water.

Suitable inert blowing agents include, for example, hydrocarbons, dialkyl ethers, alkyl alkanoates, aliphatic and cycloaliphatic hydrofluorocarbons, hydrochlorofluorocarbons, chlorofluorocarbons and fluorine-containing ethers. Suitable hydrocarbon blowing agents include lower aliphatic or cyclic hydrocarbons such as n-pentane, isopentane, cyclopentane, neopentane, hexane and cyclohexane.

The insolubility of the organic liquid in the reaction mixture usually arises from the fact that it is insoluble in one or more of the major ingredients of the foam formulation, especially the isocyanate-reactive material and/or the polyisocyanate. Solubility in these materials can be determined by conventional techniques. Insolubility is defined as showing a solubility in either the isocyanate-reactive composition or the polyisocyanate composition with which it is to be blended of less than 500 ppm by weight at 25°C and atmospheric pressure.
A "liquid" is to be understood as a compound which is in liquid state at room temperature and atmospheric pressure.

Examples of insoluble organic liquids include fluorinated compounds, aliphatic, cycloaliphatic or aromatic hydrocarbons.

It is preferred to use as insoluble organic liquid a highly fluorinated or perfluorinated compound.
The term "highly fluorinated" means that 50 % or more (preferably 90 %) of the hydrogen atoms attached to carbon atoms are replaced by fluorine atoms.

Suitable highly fluorinated or perfluorinated compounds which may be used in the present invention include aliphatic or cycloaliphatic compounds such as alkanes or cycloalkanes which may be substituted or non substituted, cyclic or non cyclic compounds containing at least one O atom, which may be substituted or non substituted, such as fluorinated ethers, cyclic or non cyclic compounds containing at least one N atom, which may be substituted or non substituted, such as fluorinated amines, cyclic or non cyclic compounds containing O and N atoms, which may be substituted or non substituted, such as fluorinated hydroxyl amines or fluorinated aminoethers, cyclic or non cyclic compounds containing at least one S atom, which may be substituted or non substituted, such as fluorinated sulfones, for example CF₃SO₂CF₃ and CF₃SO₂CF₂CF₃.
Examples of suitable highly fluorinated or perfluorinated compounds are disclosed in US 4981879, US 5034424, US 4972022, EP 508649, EP 498628 and WO 95/18176.

Particular examples of highly fluorinated or perfluorinated hydrocarbons are those containing from 1 to 15 carbon atoms, which may be either cyclic or acyclic, either aromatic or aliphatic and either saturated or unsaturated such as substantially fluorinated and perfluorinated pentane, hexane, norbornadiene, decaline, dimethylcyclohexane, methylcyclohexane, 1-methyldecaline, phenantrene, dimethylcyclobutane and isomers thereof and perfluoro(cyclo)olefins such as hexafluoropropene dimers and trimers.

Particular examples of highly fluorinated or perfluorinated oxygen containing compounds include: perfluorobutyltetrahydrofuran and perfluoropropyltetrahydrofuran.

Particular examples of highly fluorinated or perfluorinated compounds containing N atoms or N atoms and O atoms include fluorine-containing tertiary amines, for example, (CHF₂)₃N, CF₃N(CHF₂)₂, (CF₃)₂NC₂F₅, CF₃N(C₂F₅)₂, (C₂F₅)₃N, (CF₃)₂NCF₂CF₂H, CF₃CH₂N(CH₃)₂ and N-methyloctafluoropyrrolidine, fluorine-containing hydrazines, for example, (CF₃)₂NN(CF₃)₂, or (CF₃)₂NOCH₃, (CF₃)₂NOC₂F₅, CF₃NOCF₂CF₂ and (CF₃)₂NOCF₂C(CF₃) FON(CF₃)₂ and fluorine-containing amino-ethers, for example (CF₃)₂NCF₂CF₂OCF₃ and most preferably perfluoro-N-methylmorpholine, perfluorotripentylamine, perfluorotributylamine, perfluorotripropylamine, perfluoro-N-methylpiperidine.

Other suitable fluorinated compounds include the perfluorinated ethers commercialised by Montefluos S.p.A. as Galden HT 200, Galden HT 230, Galden HT 250 and Galden HT 270 (Galden is a trademark).

Particular mention may be made of the various isomers of perfluoropentane and perfluorohexane such as perfluoro-n-pentane and perfluoro-n-hexane and perfluoro(4-methylpent-2-ene).

To ensure zero ozone depletion potential, it is preferred to use fluorinated compounds containing no other halogen atoms.

The insoluble organic liquid is used in the process of the present invention in amounts ranging from 0.05 to 10 %, preferably from 0.1 to 5 %, most preferably from 0.6 to 2.6 % by weight based on the total reaction system.

The substantially insoluble organic liquid will usually be incorporated in the foam-forming reaction mixture in the form of an emulsion or preferably a microemulsion in one of the major components, that is to say in the isocyanate-reactive component and/or the polyisocyanate component. Such emulsions or microemulsions may be prepared using conventional techniques and suitable emulsifying agents.

Emulsifying agents suitable for preparing stable emulsions or microemulsions of fluorinated liquid compounds in organic polyisocyanates and/or isocyanate-reactive compounds include surfactants chosen from the group of nonionic, ionic (anionic or cationic) and amphoteric surfactants. Preferred surfactants for emulsifying the fluorinated liquid compound in the isocyanate-reactive composition are fluoro surfactants, silicone surfactants and/or alkoxylated alkanes. Particular examples of fluoro surfactants include fluorinated alkyl polyoxyethylene ethanols, fluorinated alkyl alkoxylates and fluorinated alkyl esters. Preferred surfactants for emulsifying the fluorinated liquid compound in the polyisocyanate composition are non-isocyanate-reactive silicone surfactants such as Tegostab B 8407 available from Goldschmidt and SR 234 available from Union Carbide.

Preferred metal salt catalysts for use in the present invention are those selected among group Ia and group IIa metal salts, more preferably among group Ia and group IIa metal carboxylates.

Particularly suitable catalysts for use in the present invention are potassium acetate and potassium ethylhexoate.

The metal salt catalyst is used in the process of the present invention in amounts ranging from 0.01 to 3 % by weight based on the total reaction system.

Organic polyisocyanates which may be used in the method of the present invention include aliphatic, cycloaliphatic, araliphatic and aromatic polyisocyanates but especially the polyisocyanates proposed in literature for use in the production of foams. Of particular importance are aromatic diisocyanates such as tolylene and diphenylmethane diisocyanate in the well known pure, modified or crude forms. Special mention may be made of the so-called MDI variants (diphenylmethane diisocyanate modified by the introduction of urethane, allophanate, urea, biuret, carbodiimide, uretonimine or isocyanurate residues) and the mixtures of diphenylmethane diisocyanate(s) and oligomers thereof known in the art as "crude" or "polymeric" MDI (polymethylene polyphenylene polyisocyanates).

In performing the method of the present invention the polyisocyanate may be reacted with the isocyanate-reactive cyclic blowing promotor in the absence or presence of other isocyanate-reactive materials. It is preferred, however, to perform the method of the invention in the presence of other isocyanate-reactive materials.

Suitable isocyanate-reactive compounds generally include polyols, amines, imines and enamines and mixtures thereof.
Suitable isocyanate-reactive compounds, especially polyols, have a molecular weight of 62 to 1500 and a functionality of 2 to 8, especially 3 to 8. Polymeric polyols have been fully described in the prior art and include reaction products of alkylene oxides, for example ethylene oxide and/or propylene oxide, with initiators containing from 3 to 8 active hydrogen atoms per molecule. Suitable initiators include polyols, for example, glycerol, trimethylolpropane, triethanolamine, pentaerythritol, sorbitol and sucrose, and polyamines, for example ethylenediamine, tolylene diamine, diaminodiphenylmethane and polymethylene polyphenylene polyamines, and aminoalcohols, for example, ethanolamine, diethanolamine and triethanolamine, and mixtures of such initiators. Other suitable polymeric polyols for use in the process of the present invention include polyesters obtained by the condensation of appropriate proportions of glycols and higher functionality polyols with dicarboxylic acids. Still further suitable polymeric polyols include hydroxyl terminated polythioethers, polyamides, polyesteramides, polycarbonates, polyacetals, polyolefins and polysiloxanes.

In addition to the ingredients already mentioned the foam-forming mixture may contain one or more other auxiliaries or additives conventional to isocyanate-based foam formulations. Such optional additives include further conventional catalysts, fire retardants, smoke suppressants, organic or inorganic fillers, thixotropic agents, dyes, pigments, mould release agents, surfactants, and foam stabilisers.

Isocyanate indices of from 70 to 140 will typically be used in operating the method of the present invention but lower indices may be used if desired. Higher indices, for example 150 to 500 or even up to 3000, may be used in conjunction with trimerisation catalysts to make foams containing isocyanurate linkages.

To reduce the number of component streams delivered to the final mixing apparatus, the cyclic isocyanate-reactive blowing promotor, the catalyst, the insoluble organic liquid, the primary diol and optionally other additives may be premixed with one of the major components of the foam formulation, in general with the isocyanate-reactive component.

Therefore the present invention also provides an isocyanate-reactive composition comprising a blowing promotor being an isocyanate-reactive cyclic compound of formula: 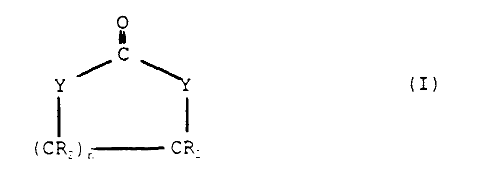 wherein
Y is O or NR¹ wherein each R¹ independently is a lower alkyl radical of C₁-C₆ or a lower alkyl radical substituted with an isocyanate-reactive group; each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
an insoluble organic liquid showing a solubility in either the isocyanate-reactive composition or the polyisocyanate composition of less than 500 ppm by weight at 25°C and atmospheric pressure and a metal salt catalyst, characterised in that said isocyanate-reactive composition also comprises a pimary diol which is a polyethylenglycol containing from 2 to 10 ethylene units.

The method of the present invention may be put into practice making use of conventional techniques. Thus known mixing methods may be used and the foams may be produced in the form of slabstock, mouldings, cavity fillings, sprayed foam, frothed foam or laminates with other materials such as hardboard, plasterboard, paper, plastics or metal.

Further details as to the above described process for making open-celled rigid polyurethane foam are described in EP 498628 and WO 95/02620.

Rigid polyurethane foams prepared in accordance with the method of the invention are characterised by having a higher open cell content than those prepared in the absence of the primary diol. A 100 % open celled foam is essential if the foam is to be used as filler in evacuated insulation panels.
Further such foams if prepared via lamination generally contain a skin of high closed cell content which is waste. By using the process of the present invention the thickness of said skin can be substantially reduced.

The open celled rigid polyurethane foams prepared according to the present process are of particular use for evacuated insulation panel applications where they show superior thermal insulation properties. Further outgassing (i.e. gases such as air, water vapour or blowing agent diffusing gradually from closed cell portions) of an open celled rigid polyurethane foam of the present invention is decreased compared to foams with higher closed cell content and thus internal pressure increase with lapse of time of evacuated insulation panels filled with the present foams is decreased leading to improved thermal insulation. Further the time needed to evacuate the panel to the desired pressure level is decreased owing to the lower closed cell content of the present foam.

Evacuated insulation panels generally comprise a low thermal conductivity filler material (such as open celled polyurethane foam) and a vessel formed of a gastight film enveloping said filler, the whole being evacuated to an internal pressure of about 5 mbar or less and then hermetically sealed.

General descriptions of the construction of evacuated insulation panels and their use in thermal devices can be found in US Patents Nos 5,066,437, 5,032,439 and 5,076,984 and European Patent Publications Nos 434266, 434225 and 181778.

The following examples do not fall under the claims, however, the invention is illustrated by these examples wherein the following ingredients were used:
Daltolac XR 144 being a polyether polyol available from Imperial Chemical Industries PLC;
Daltolac XR 151 being a polyether polyol available from Imperial Chemical Industries PLC;
Tegostab B 8406 being a silicone surfactant available from Goldschmidt; Fixapret NF being a 50 wt% aqueous solution of a cyclic urea of formula (III) available from BASF;
MEG being monoethyleneglycol;
PFH being perfluorohexane available from 3M;
Catalyst LB being a metal salt catalyst available from Imperial Chemical Industries PLC;
FIX-MEG 1 being a composition containing 45 wt% cyclic urea of formula (III), 40 wt% MEG and 15 wt% water;
FIX-MEG 2 being a composition containing 58.2 wt% cyclic urea of formula (III), 29 wt% MEG and 12.8 wt% water;
FIX-MEG 3 being a composition containing 48 wt% cyclic urea of formula (III), 46.5 wt% MEG and 5.5 wt% water;
Suprasec X2185 being a polymeric MDI available from Imperial Chemical Industries PLC.

### EXAMPLE 1

Rigid foams were prepared by using the formulations (amounts are given in parts by weight) as listed in Table 1. MEG is added either directly to the polyol blend or is added to the Fixapret NF solution followed by partially distilling off the water (thus via the FIX-MEG components).
Some foam properties are also given in Table 1: isocyanate index, free rise density expressed in kg/m³ and closed cell content (CCC) given in %.
Density (core density) was measured according to DIN 53420 standard. Closed cell content was measured according to BS 4370 Method 10 standard and represents volume % of closed cells.

**Table 1**

| Foam No. | I | II | III | IV | V |
|---|---|---|---|---|---|
| DALTOLAC XR144 | 61.4 | 61.4 | 61.4 | 61.4 | 61.4 |
| DALTOLAC XR151 | 26.32 | 26.32 | 26.32 | 26.32 | 26.32 |
| B 8406 | 4.39 | 4.39 | 4.39 | 4.39 | 4.39 |
| Fixapret NF | 3 | 3 | | | |
| MEG | | 1.35 | | | |
| FIX-MEG 1 | | | | 2.1 | |
| FIX-MEG 2 | | | | | 2.1 |
| FIX-MEG 3 | | | 3 | | |
| water | | 0.1 | 1.45 | 1.3 | 1.35 |
| perfluorohexane | 5.26 | 5.26 | 5.26 | 5.26 | 5.26 |
| LB | 1.3 | 1.3 | 1.3 | 1.3 | 1.3 |
| SUPRASEC X2185 | 115.3 | 125.8 | 131.7 | 126.7 | 127 |
| Index | 140 | 140 | 140 | 140 | 140 |
| Density | 38.7 | 34.5 | 38.6 | 36.0 | 38.0 |
| CCC | 10.2 | 3.1 | 2.6 | 2.0 | 4.2 |

The above results show that adding MEG either to the polyol blend or to the Fixapret solution decreases the closed cell content.

### EXAMPLE 2

Rigid foams were prepared by using the formulations (amounts are given in parts by weight) as listed in Table 2. MEG is added either directly to the polyol blend or is added to the Fixapret NF solution followed by partially distilling off the water (thus via the FIX-MEG components).
Some foam properties are also given in Table 2: isocyanate index, free rise density expressed in kg/m³ and closed cell content (CCC) given in %. Density (core density) was measured according to DIN 53420 standard. Closed cell content was measured according to BS 4370 Method 10 standard and represents volume % of closed cells.

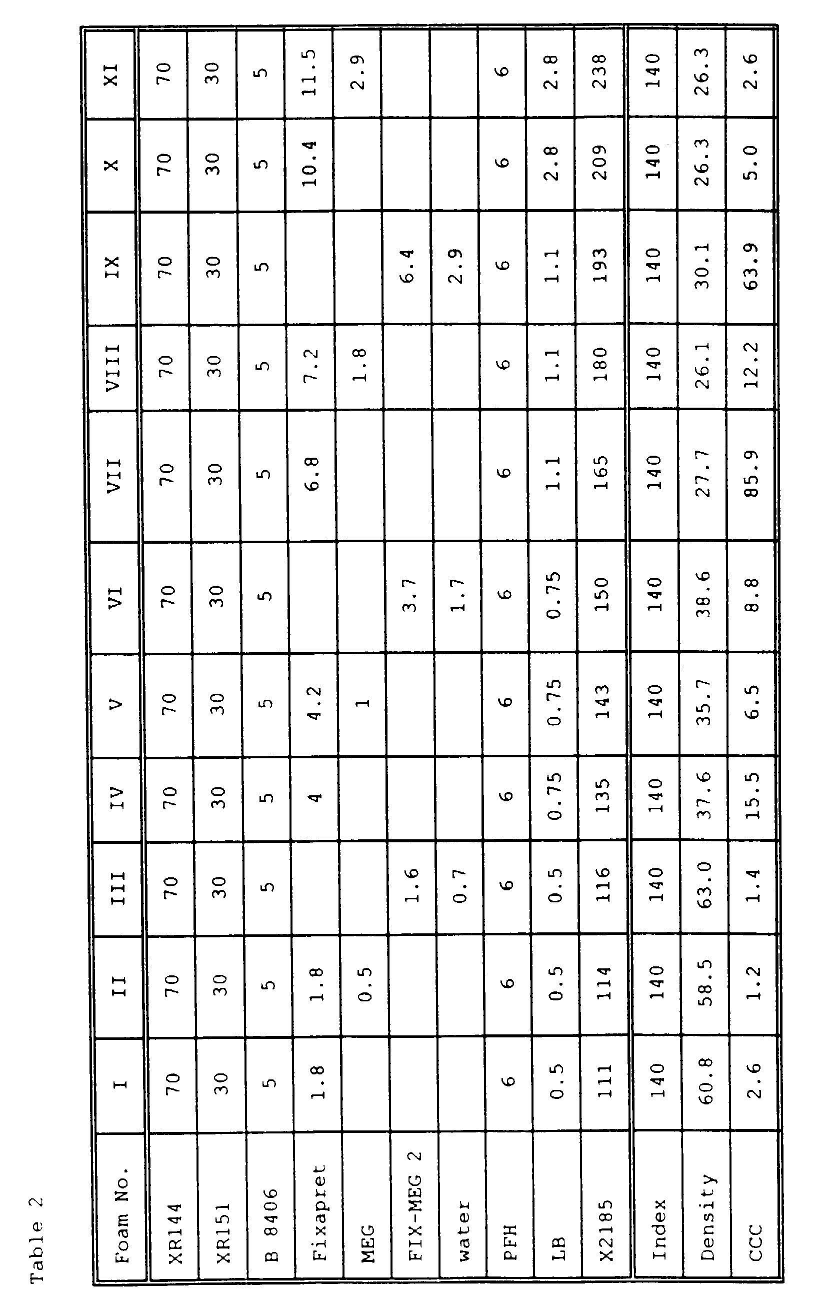

### EXAMPLE 3

Rigid foams were prepared by using the formulations (amounts are given in parts by weight) as listed in Table 3. MEG is added either directly to the polyol blend or to the Fixapret NF solution followed by partially distilling off the water (thus via the FIX-MEG components) or to both.
Some foam properties are also given in Table 3: isocyanate index, free rise density expressed in kg/m³ and closed cell content (CCC) given in %. Density (core density) was measured according to DIN 53420 standard. Closed cell content was measured according to BS 4370 Method 10 standard and represents volume % of closed cells.

**Table 3**

| Foam No. | I | II | III | IV |
|---|---|---|---|---|
| DALTOLAC XR144 | 70 | 70 | 70 | 70 |
| DALTOLAC XR151 | 30 | 30 | 30 | 30 |
| B 8406 | 5 | 5 | 5 | 5 |
| Fixapret NF | 2.4 | 2.6 | | |
| MEG | | 1.5 | | 0.9 |
| FIX-MEG 2 | | | 2.2 | 2.3 |
| water | | | 1 | 1 |
| perfluorohexane | 6 | 6 | 6 | 6 |
| LB | 0.75 | 0.65 | 0.75 | 0.65 |
| SUPRASEC X2185 | 128 | 140 | 138 | 144 |
| Index | 140 | 140 | 140 | 140 |
| Density | 52.2 | 48.4 | 53.4 | 52.5 |
| CCC | 6.1 | 1.3 | 3.5 | 0.7 |

### EXAMPLE 4

Rigid foams were prepared by using the formulations (amounts are given in parts by weight) as listed in Table 4.
Some foam properties are also given in Table 4: isocyanate index, free rise density expressed in kg/m³ and closed cell content (CCC, given in ) of the foam bloc and of the foam skin at 5 mm, 7.5 mm and 10 mm depth.
Density (core density) was measured according to DIN 53420 standard. Closed cell content was measured according to BS 4370 Method 10 standard and represents volume % of closed cells.

**Table 4**

| Foam No. | I | II | III |
|---|---|---|---|
| DALTOLAC XR144 | 70 | 70 | 70 |
| DALTOLAC XR151 | 30 | 30 | 30 |
| B 8406 | 5 | 5 | 5 |
| Fixapret NF | 1.4 | 1.4 | 1.5 |
| MEG | 0.5 | 0.7 | 1.0 |
| water | 0.3 | 0.3 | 0.2 |
| perfluorohexane | 6 | 6 | 6 |
| LB | 0.75 | 0.65 | 0.65 |
| SUPRASEC X2185 | 127 | 128 | 129 |
| Index | 140 | 140 | 140 |
| Density | 59.5 | 59.6 | 59.5 |
| CCC (bloc) | 0.4 | 0.6 | 0.3 |
| CCC (5 mm) | 38.8 | 36.9 | 34.0 |
| CCC (7.5 mm) | 38.4 | 37.3 | 27.9 |
| CCC (10 mm) | 34.1 | 34.0 | 24.5 |

The above results indicate that addition of MEG leads to a decrease in closed cell content in the foam skin.

## Claims

1. Process for the preparation of rigid foams comprising the step of reacting an organic polyisocyanate with an isocyanate-reactive material in the presence of a blowing promotor being an isocyanate-reactive cyclic compound of formula: 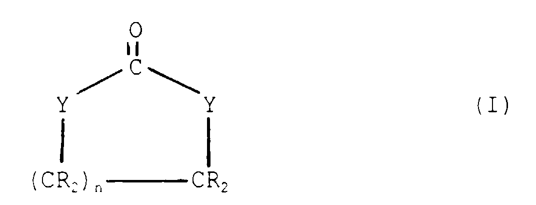 wherein
Y is O or NR¹ wherein each R¹ independently is a lower alkyl radical of C₁-C₆ or a lower alkyl radical of C₁-C₆ substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
and in the presence of an insoluble organic liquid showing a solubility in either the isocyanate-reactive composition or the polyisocyanate composition of less than 500 ppm by weight at 25°C and atmospheric pressure and in the presence of a metal salt catalyst, characterised in that the foam-forming composition further contains a primary diol which is a polyethyleneglycol containing from 2 to 10 ethylene units.

2. Process according to claim 1 wherein the weight ratio of said primary diol and the isocyanate-reactive cyclic blowing promotor is between 0.1 and 20.

3. Process according to claim 2 wherein the weight ratio is between 0.4 and 1.5.

4. Process according to any one of the preceding claims wherein the isocyanate-reactive cyclic blowing promotor is a cyclic urea of formula 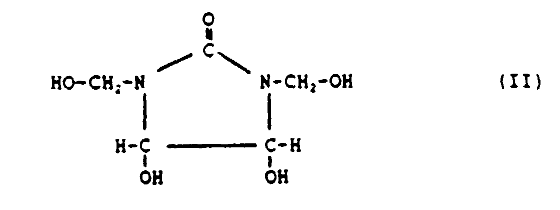 or

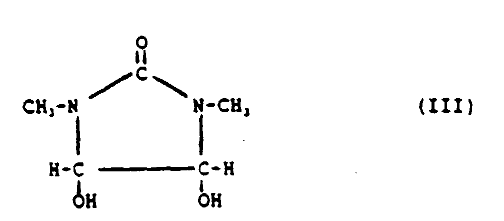

5. Process according to any one of the preceding claims wherein the isocyanate-reactive cyclic blowing promotor is used in amounts ranging from 1 to 99 % by weight based on the total isocyanate-reactive material.

6. Process according to any one of the preceding claims wherein the insoluble organic liquid is a highly fluorinated or perfluorinated compound.

7. Process according to claim 6 wherein the insoluble organic liquid is perfluoro-n-pentane or perfluoro-n-hexane or perfluoro(4-methylpent-2-ene).

8. Process according to any one of the preceding claims wherein the insoluble organic liquid is added in amounts ranging from 0.1 to 5 % by weight based on the total reaction system.

9. Process according to any one of the preceding claims wherein the metal salt catalyst is a group Ia or group IIa metal carboxylate.

10. Process according to any one of the preceding claims wherein the metal salt catalyst is added in amounts ranging from 0.01 to 3 % by weight based on the total reaction system.

11. Isocyanate-reactive composition comprising a blowing promotor being an isocyanate-reactive cyclic compound of formula: 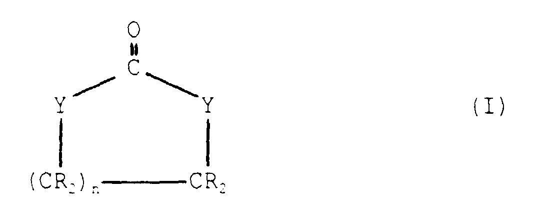 wherein
Y is O or NR¹ wherein each R¹ independently is a lower alkyl radical of C₁-C₆ or a lower alkyl radical of C₁-C₆ substituted with an isocyanate-reactive group;
each R independently is hydrogen, a lower alkyl radical of C₁-C₆ or (CH₂)ₘ-X wherein X is an isocyanate-reactive group which is OH or NH₂ and m is 0, 1 or 2; and
n is 1 or 2;
with the proviso that at least one of R¹ or R is or comprises an isocyanate-reactive group;
an insoluble organic liquid showing a solubility in either the isocyanate-reactive composition or the polyisocyanate composition of less than 500 ppm by weight at 25°C and atmospheric pressure and a metal salt catalyst, characterised in that said isocyanate-reactive composition comprises a primary diol which is a polyethyleneglycol containing from 2 to 10 ethylene units.

12. Rigid open celled polyurethane foam obtainable by the process as defined in any one of claims 1 to 10.

13. Evacuated insulation panel comprising a filler material and a vessel formed of a gastight film enveloping said filler, characterised in that said filler material comprises a rigid open celled polyurethane foam as defined in claim 12.

## Patentansprüche

1. Verfahren zur Herstellung von Hartschäumen, umfassend den Schritt der Umsetzung eines organischen Polyisocyanats mit einem Isocyanat-reaktiven Material
in Gegenwart eines Treibpromotors, der eine Isocyanat-reaktive cyclische Verbindung der Formel 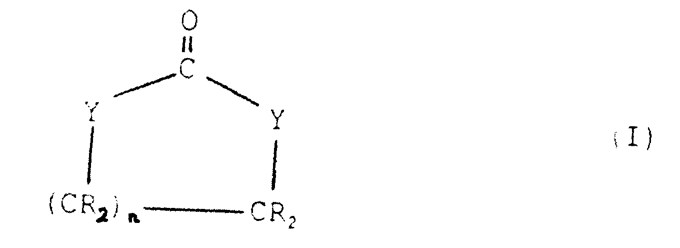 ist, in der Y O oder NR¹ ist, wobei jedes R¹ unabhängig voneinander ein niederes Alkylradikal von C₁ bis C₆ oder ein mit einer Isocyanat-reaktiven Gruppe substituiertes niederes Alkylradikal von C₁ bis C₆ ist; jedes R unabhängig voneinander Wasserstoff, ein niederes Alkylradikal von C₁ bis C₆ oder (CH₂)ₘ-X ist, wobei X eine Isocyanat-reaktive Gruppe ist, die OH oder NH₂ ist, und m 0, 1 oder 2 ist; und
n 1 oder 2 ist; mit der Maßgabe, daß mindestens eines von R¹ oder R eine Isocyanat-reaktive Gruppe ist oder umfaßt;
und in Gegenwart einer unlöslichen organischen Flüssigkeit, die eine Löslichkeit entweder in der Isocyanat-reaktiven Zusammensetzung oder in der Polyisocyanatzusammensetzung von weniger als 500 Gewichts-ppm bei 25 °C und Atmosphärendruck aufweist, sowie
in Gegenwart eines Metallsalzkatalysators,
dadurch gekennzeichnet, daß die schaumbildende Zusammensetzung ferner ein primäres Diol enthält, das ein 2 bis 10 Ethyleneinheiten enthaltendes Polyethylenglykol ist.

2. Verfahren nach Anspruch 1, wobei das Gewichtsverhältnis des primären Diols und des Isocyanat-reaktiven cyclischen Treibpromotors zwischen 0,1 und 20 liegt.

3. Verfahren nach Anspruch 2, wobei das Gewichtsverhältnis zwischen 0,4 und 1,5 liegt.

4. Verfahren nach einem der vorstehenden Ansprüche, wobei der Isocyanat-reaktive cyclische Treibpromotor ein cyclischer Harnstoff der Formel 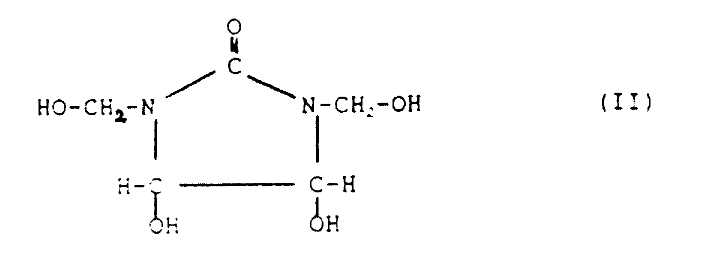 oder 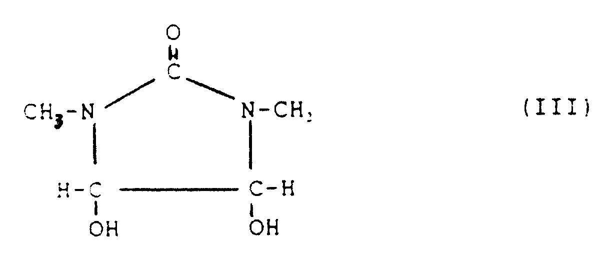 ist.

5. Verfahren nach einem der vorstehenden Ansprüche, wobei der Isocyanat-reaktive cyclische Treibpromotor in Mengen verwendet wird, die im Bereich von 1 bis 99 Gewichtsprozent, bezogen auf das gesamte Isocyanat-reaktive Material, liegen.

6. Verfahren nach einem der vorstehenden Ansprüche, wobei die unlösliche organische Flüssigkeit eine hochfluorierte oder perfluorierte Verbindung ist.

7. Verfahren nach Anspruch 6, wobei die unlösliche organische flüssigkeit Perfluor-n-pentan oder Perfluor-n-hexan oder Perfluor(4-methylpent-2-en) ist.

8. Verfahren nach einem der vorstehenden Ansprüche, wobei die unlösliche organische Flüssigkeit in Mengen im Bereich von 0,1 bis 5 Gewichtsprozent, bezogen auf das gesamte Reaktionssystem, zugegeben wird.

9. Verfahren nach einem der vorstehenden Ansprüche, wobei der Metallsalzkatalysator ein Metallcarboxylat der Gruppe Ia oder der Gruppe IIa ist.

10. Verfahren nach einem der vorstehenden Ansprüche, wobei der Metallsalzkatalysator in Mengen zugegeben wird, die in einem Bereich von 0,01 bis 3 Gewichtsprozent, bezogen auf das gesamte Reaktionssystem, liegen.

11. Isocyanat-reaktive Zusammensetzung, umfassend einen Treibpromotor, der eine Isocyanat-reaktive cyclische Verbindung der Formel 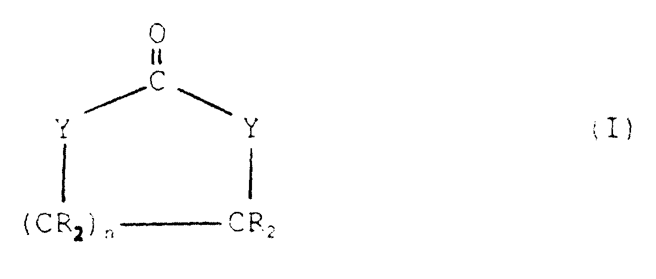
ist, in der Y O oder NR¹ ist, wobei jedes R¹ unabhängig voneinander ein niederes Alkylradikal von C₁ bis C₆ oder ein mit einer isocyanat-reaktiven Gruppe substituiertes niederes Alkylradikal von C₁ bis C₆ ist; jedes R unabhängig voneinander Wasserstoff, ein niederes Alkylradikal von C₁ bis C₆ oder (CH₂)ₘ-X ist, wobei X eine Isocyanat-reaktive Gruppe ist, die OH oder NH₂ ist, und m 0, 1 oder 2 ist; und
n 1 oder 2 ist; mit der Maßgabe, daß mindestens eines von R₁ oder R eine Isocyanat-reaktive Gruppe ist oder umfaßt;
eine unlösliche organische Flüssigkeit, die eine Löslichkeit entweder in der Isocyanat-reaktiven Zusammensetzung oder in der Polyisocyanatzusammensetzung von weniger als 500 Gewichts-ppm bei 25 °C und Atmosphärendruck aufweist, sowie einen Metallsalzkatalysator,
dadurch gekennzeichnet, daß die Isocyanat-reaktive Zusammensetzung ein primäres Diol umfaßt, das ein 2 bis 10 Ethyleneinheiten enthaltendes Polyethylenglykol ist.

12. Offenzelliger Polyurethanhartschaum, der durch das in irgendeinem der Ansprüche 1 bis 10 definierte Verfahren erhältlich ist.

13. Evakuierte Isolierverkleidung, umfassend ein Füllmaterial und einen aus einem das Füllmaterial umhüllenden gasdichten Film gebildeten Behälter, dadurch gekennzeichnet, daß das Füllmaterial einen wie in Anspruch 12 definierten offenzelligen Polyurethanhartschaum umfaßt.

## Revendications

1. Procédé pour la préparation de mousses rigides, comprenant l'étape consistant à faire réagir un polyisocyanate organique avec une matière réactive avec les isocyanates en présence d'un promoteur porogène consistant en un composé cyclique, réactif avec les isocyanates, de formule : 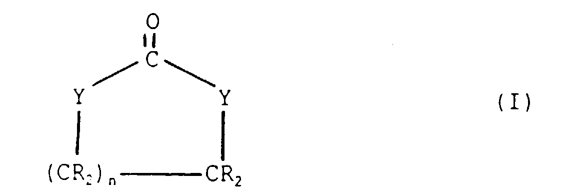 dans laquelle
Y représente O ou un groupe NR¹ dans lequel chaque groupe R¹ représente, indépendamment, un radical alkyle inférieur en C₁ à C₆ ou un radical alkyle inférieur en C₁ à C₆ substitué avec un groupe réactif avec les isocyanates ;
chaque groupe R représente, indépendamment, l'hydrogène, un radical alkyle inférieur en C₁ à C₆ ou (CH₂)ₘ-X dans lequel X représente un groupe réactif avec les isocyanates qui consiste en un groupe OH ou NH₂ et m est égal à 0, 1 ou 2 ; et
n est égal à 1 ou 2 ;
sous réserve qu'au moins un des groupes R¹ et R soit ou comprenne un groupe réactif avec les isocyanates ;
et en présence d'un liquide organique insoluble présentant une solubilité dans la composition réactive avec les isocyanates ou la composition de polyisocyanate inférieure à 500 ppm en poids à 25°C et sous la pression atmosphérique, et en présence d'un catalyseur consistant en un sel métallique, caractérisé en ce que la composition de formation de mousse contient en outre un diol primaire qui est un polyéthylène-glycol contenant 2 à 10 motifs éthylène.

2. Procédé suivant la revendication 1, dans lequel le rapport pondéral du diol primaire au promoteur porogène cyclique réactif avec les isocyanates est compris dans l'intervalle de 0,1 à 20.

3. Procédé suivant la revendication 2, dans lequel le rapport pondéral est compris dans l'intervalle de 0,4 à 1,5.

4. Procédé suivant l'une quelconque des revendications précédentes, dans lequel le promoteur porogène cyclique réactif avec les isocyanates est une urée cyclique de formule 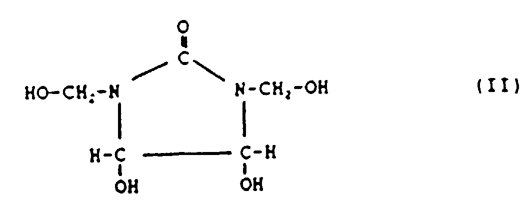 ou

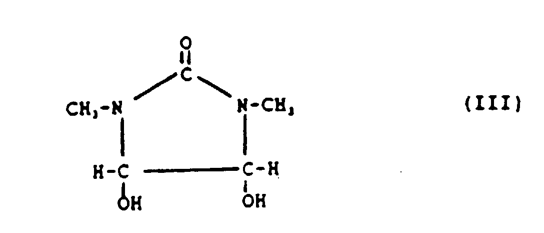

5. Procédé suivant l'une quelconque des revendications précédentes, dans lequel le promoteur porogène cyclique réactif avec les isocyanates est utilisé en des quantités de 1 à 99 % en poids sur la base de la matière totale réactive avec les isocyanates.

6. Procédé suivant l'une quelconque des revendications précédentes, dans lequel le liquide organique insoluble est un composé fortement fluoré ou perfluoré.

7. Procédé suivant la revendication 6, dans lequel le liquide organique insoluble consiste en perfluoro-n-pentane ou perfluoro-n-hexane ou bien perfluoro- (4-méthylpent-2-ène).

8. Procédé suivant l'une quelconque des revendications précédentes, dans lequel le liquide organique insoluble est ajouté en des quantités de 0,1 à 5 % en poids sur la base du système réactionnel total.

9. Procédé suivant l'une quelconque des revendications précédentes, dans lequel le catalyseur consistant en un sel métallique est un carboxylate de métal du groupe IA ou du groupe IIa.

10. Procédé suivant l'une quelconque des revendications précédentes, dans lequel le catalyseur consistant en un sel métallique est ajouté en des quantités de 0,01 à 3 % en poids sur la base du système réactionnel total.

11. Composition réactive avec les isocyanates, comprenant un promoteur porogène consistant en un composé cyclique, réactif avec les isocyanates, de formule : 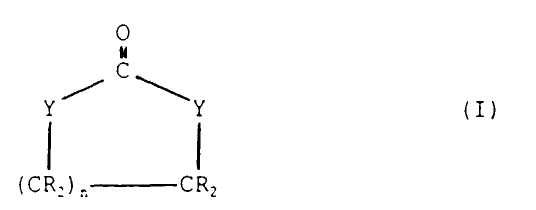 dans laquelle
Y représente O ou un groupe NR¹ dans lequel chaque groupe R¹ représente, indépendamment, un radical alkyle inférieur en C₁ à C₆ ou un radical alkyle inférieur en C₁ à C₆ substitué avec un groupe réactif avec les isocyanates ;
chaque groupe R représente, indépendamment, l'hydrogène, un radical alkyle inférieur en C₁ à C₆ ou (CH₂)ₘ-X dans lequel X représente un groupe réactif avec les isocyanates qui consiste en un groupe OH ou NH₂ et m est égal à 0, 1 ou 2 ; et
n est égal à 1 ou 2 ;
sous réserve qu'au moins un des groupes R¹ et R soit ou comprenne un groupe réactif avec les isocyanates ;
un liquide organique insoluble présentant une solubilité dans la composition réactive avec les isocyanates ou la composition de polyisocyanate inférieure à 500 ppm en poids à 25°C et sous la pression atmosphérique, et un catalyseur consistant en un sel métallique, ladite composition réactive avec les isocyanates étant caractérisée en ce qu'elle comprend un diol primaire qui est un polyéthylène-glycol contenant 2 à 10 motifs éthylène.

12. Mousse de polyuréthanne rigide à cellules ouvertes pouvant être obtenue par le procédé répondant à la définition suivant l'une quelconque des revendications 1 à 10.

13. Panneau isolant sous vide, comprenant une matière servant de charge et un récipient formé d'un film étanche aux gaz enveloppant ladite charge, caractérisé en ce que ladite matière servant de charge comprend une mousse de polyuréthanne rigide à cellules ouvertes répondant à la définition suivant la revendication 12.
